Europäisches Patentamt

(19) European Patent Office

Office européen des brevets

(11) Numéro de publication : **0 165 184**
**B1**

(12) **FASCICULE DE BREVET EUROPÉEN**

(45) Date de publication du fascicule du brevet :
27.07.88

(21) Numéro de dépôt : 85420091.2

(22) Date de dépôt : 15.05.85

(51) Int. Cl.⁴ : **H 02 B 13/02**, H 02 B 1/18

(54) **Poste blindé triphasé à isolement gazeux.**

(30) Priorité : 24.05.84 JP 103735/84

(43) Date de publication de la demande :
18.12.85 Bulletin 85/51

(45) Mention de la délivrance du brevet :
27.07.88 Bulletin 88/30

(84) Etats contractants désignés :
**AT BE CH DE FR GB IT LI NL SE**

(56) Documents cités :
FR-A- 822 952
FR-A- 1 434 407
GB-A- 1 141 962

(73) Titulaire : **MERLIN GERIN**
**Rue Henri Tarze**
**F-38050 Grenoble Cedex (FR)**

(72) Inventeur : **Shimoda, Sumio c/o Nissin Electric Co.**
**Ltd.**
**47, Umezu Takase-cho**
**Ukyo-Ku Kyoto (JP)**
Inventeur : **Miyazaki, Masanori c/o Nissin Electric Co.**
**Ltd.**
**47, Umezu Takase-cho**
**Ukyo-Ku Kyoto (JP)**

(74) Mandataire : **Kern, Paul et al**
**Merlin Gerin Sce. Brevets 20, rue Henri Tarze**
**F-38050 Grenoble Cedex (FR)**

Jouve, 18, rue St-Denis, 75001 Paris, France

## Description

L'invention est relative à un poste blindé triphasé à enveloppe métallique remplie de gaz isolant à rigidité diélectrique élevée, notamment de l'hexafluorure de soufre, ladite enveloppe étant commune aux trois phases et subdivisée en une pluralité de tronçons élémentaires, raccordés entre eux pour former des compartiments individuels étanches, renfermant de l'appareillage électrique de coupure, de connexion et de mesure, connecté électriquement entre un système de jeu de barres triphasé et un départ ou arrivée, l'un des compartiments servant de logement à un transformateur de potentiel triphasé, connecté par des conducteurs de liaison audit jeu de barres, qui s'étend dans un compartiment juxtaposé avec interposition d'un isolateur support entre les brides de raccordement des compartiments accolés.

Le document FR-A-822 952 décrit un dispositif du genre mentionné ci-dessus.

La mise à la terre du jeu de barres triphasé s'effectue généralement par l'intermédiaire d'un sectionneur de terre logé dans un compartiment indépendant, rattaché à celui du jeu de barres, à l'opposé du compartiment du transformateur de potentiel. Il en résulte un encombrement important de l'architecture du poste blindé.

L'objet de l'invention consiste à réduire les dimensions de l'enveloppe métallique renfermant les trois phases d'un poste blindé triphasé, grâce à une diminution du nombre de compartiments.

Le poste selon l'invention est caractérisé en ce que la bride de raccordement du compartiment cylindrique renfermant le transformateur de potentiel se trouve excentrée par rapport à l'axe longitudinal dudit compartiment, et qu'un sectionneur de terre est agencé à l'intérieur du compartiment du transformateur de potentiel dans un espace libre ménagé radialement entre les conducteurs de liaison et une paroi latérale interne dudit compartiment, la fermeture du sectionneur provoquant la mise à la terre du jeu de barres triphasé.

Le même compartiment contient à la fois le transformateur triphasé de potentiel et le sectionneur de mise à la terre du jeu de barres triphasé. L'incorporation du sectionneur de terre est rendue possible, grâce à la position excentrée de la bride de raccordement au jeu de barres autorisant une mise en forme prédéterminée des conducteurs de liaison servant de support aux contacts fixes de sectionneur de terre.

Le sectionneur de terre du jeu de barres est relié par des conducteurs internes de connexion à trois plots de mise à la terre, situés sur un flasque équipé de ladite bride excentrée de raccordement à l'isolateur support.

Les trois plots de mise à la terre sont avantageusement associés à trois isolateurs de traversée montés en alignement transversal sur ledit flasque avec un décalage radial prédéterminé par rapport à l'axe de la bride excentrée.

Le diamètre de ladite bride excentrée est inférieur à celui du compartiment cylindrique, renfermant le transformateur de potentiel et le sectionneur de terre associé.

D'autres avantages et caractéristiques ressortiront plus clairement de la description qui va suivre de deux modes de réalisation de l'invention, donnés à titre d'exemples non limitatifs et représentés aux dessins annexés, dans lesquels :

— la figure 1 montre le schéma électrique d'un poste blindé triphasé à double jeu de barre ;

— la figure 2 est une vue en élévation et en coupe partielle d'une unité auxiliaire du poste selon l'invention ;

— la figure 3 représente une coupe selon la ligne II-II de la figure 2 ;

— la figure 4 est une vue schématique en élévation de l'unité principale de commutation du poste, associée à l'unité auxiliaire de la figure 2 ;

— la figure 5 est une vue identique à celle de la figure 2 d'une variante de réalisation de l'unité auxiliaire ;

— la figure 6 montre une variante de l'unité principale de commutation, coopérant avec l'unité auxiliaire de la figure 5.

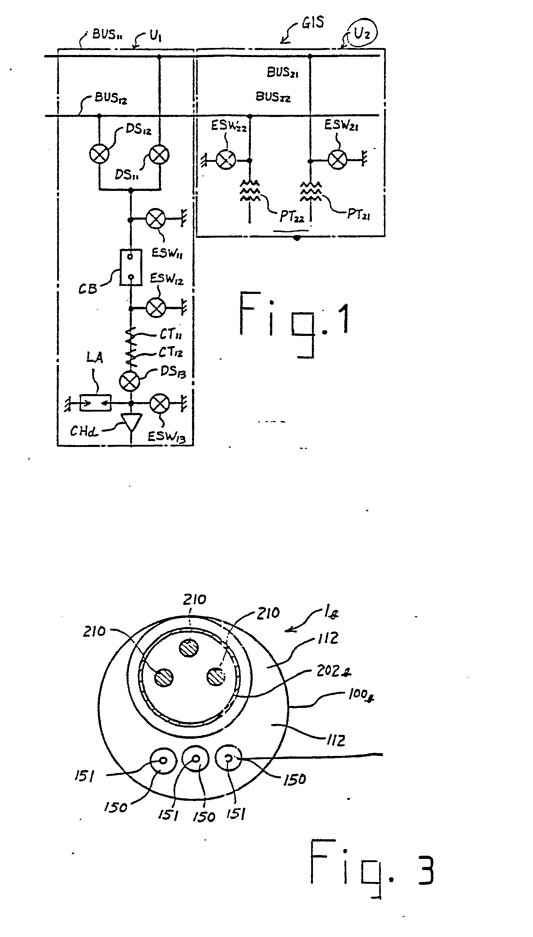

Le schéma électrique (figure 1) du poste blindé GIS triphasé, isolé par un gaz isolant à rigidité diélectrique élevée, notamment du SF6, montre deux unités U1, U2, raccordées à un double jeu de barres BUS 11, BUS 21 ; BUS 12, BUS 22 triphasés. L'unité principale U1 comporte deux sectionneurs d'aiguillage DS 11, DS 12, reliés aux tronçons correspondants du double jeu de barres BUS 11, BUS 12, et un disjoncteur CB connecté électriquement à un départ CHd ou arrivée, par l'intermédiaire d'un sectionneur de ligne DS 13. Au moins un transformateur de courant CT 11, CT 12 entoure chaque conducteur de phase situé entre le disjoncteur CB et le sectionneur de ligne DS 13. Un premier sectionneur de terre ESW 11 est associé à la borne amont du disjoncteur CB, et un deuxième sectionneur de terre ESW 12 est associé à la borne aval du disjoncteur CB. Entre le sectionneur de ligne DS 13 et le départ CHd sont agencés un troisième sectionneur de terre ESW 13 et éventuellement un parafoudre LA. Les deux sectionneurs d'aiguillage DS 11, DS 12 permettent le raccordement électrique du départ CHd à l'un ou à l'autre des jeux de barres BUS 11, BUS 12.

L'unité auxiliaire U2 renferme deux transformateurs de potentiel PT 21, PT 22 triphasés, raccordés aux tronçons correspondants BUS 21, BUS 22 du double jeu de barres, et deux sectionneurs ESW 21, ESW 22 pour la mise à la terre desdits tronçons. Ces derniers sont alignés et reliés avec les tronçons BUS 11, BUS 12 respectifs de l'unité principale U1.

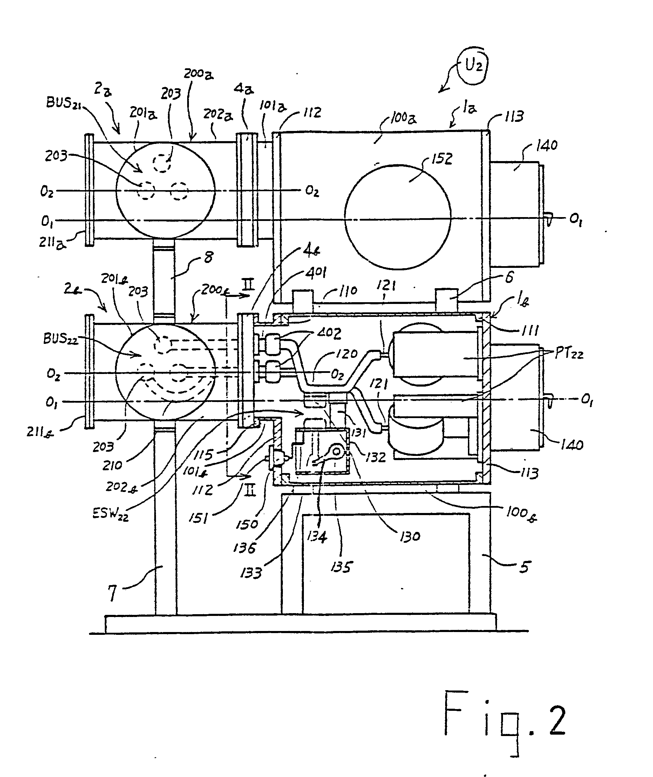

Selon la réalisation du poste blindé GIS triphasé, représenté aux figures 2 à 4, l'isolement gazeux est assuré par de l'hexafluorure de soufre (SF 6) et les deux unités U1 et U2 parallèles et juxtaposés sont échelonnées le long de la direction d'alignement des barres triphasées du jeu de barres en se raccordant perpendiculairement aux tronçons BUS 12, BUS 11 ; BUS 22, BUS 21 superposés deux à deux. L'unité auxiliaire U2, figure 2 est formée par la juxtaposition de quatre sous-ensembles 1 a, 1 b, 2 a, 2 b remplis d'hexafluorure de soufre (SF 6) et prenant appui sur un socle 5 et des moyens de support 7 et 8.

Les deux sous-ensembles 1 a, 1 b (représentés sur la droite), sont identiques et comportent deux compartiments 100 a, 100 b cylindriques superposés, renfermant chacun un transformateur de potentiel PT 21, PT 22 triphasé, pour la mesure de la tension alternative des tronçons BUS 21, BUS 22 du double jeu de barres, et un sectionneur ESW 21, ESW 22 de mise à la terre desdits tronçons. Seul le sous-ensemble 1 b sera décrit en détail par la suite. Le transformateur de potentiel triphasé PT 22 est solidarisé à un fond 113, associé à une bride 111 du compartiment 100 b, et est relié par des conducteurs de liaison 120, 121, à des points de raccordement 401, 402 portés par un isolateur support 4 b en forme de disque. Sur la face externe du fond 113 est monté un coffret 140 pour le logement de l'appareillage de mesure, associé au transformateur de potentiel PT 22. A l'opposé de la bride 111 du compartiment 100 b cylindrique, se trouve la bride 110, à laquelle est accolé un flasque 112, ayant un embout 101 b tubulaire de raccordement excentré à bride 115. L'axe 02 02 de l'embout 101 b se trouve décalé radialement, par rapport à l'axe parallèle 01 01 du compartiment 100 b. Le diamètre de la bride 115 est inférieur à celui de la bride 110, et l'isolateur support 4 b est interposé entre la bride 115 et l'enveloppe 200 b du tronçon de jeu de barres triphasé BUS 22 du sous-ensemble 2 b. L'enveloppe 200 b comporte un carter 202 b cylindrique, dont l'axe longitudinal coïncide avec l'axe 02 02 de l'embout 101 b excentré de raccordement du compartiment 100 b. Le carter 202 b est fermé à l'opposé de l'isolateur 4 b par une plaque 211 b, et renferme trois conducteurs 210 pour la liaison électrique entre les points de raccordement 401, 402 des conducteurs 120 et les barres 203 des phases respectives du tronçon de jeu de barres BUS 22.

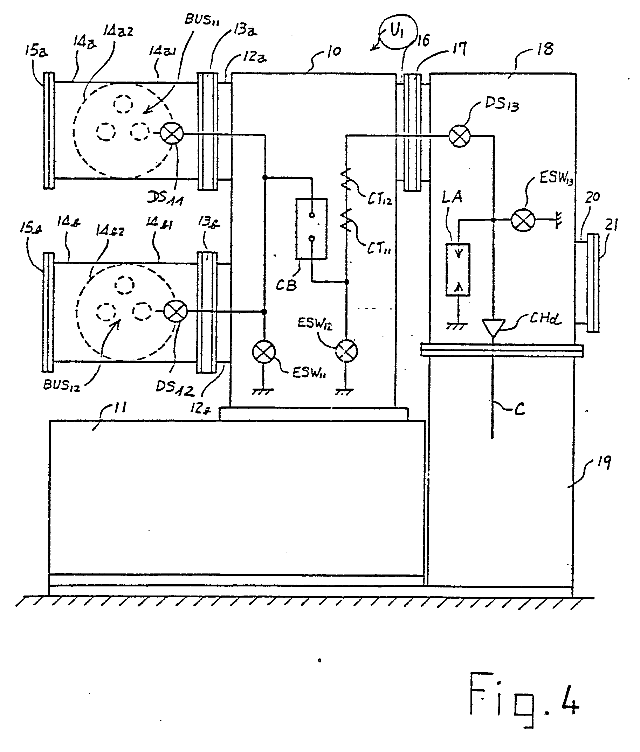

La position excentrée de l'embout 101 b de raccordement permet d'agencer le sectionneur de mise à la terre ESW 22 à l'intérieur du compartiment 100 b dans un espace libre ménagé entre les conducteurs 120 et la paroi latérale inférieure du compartiment 100 b cylindrique. Le sectionneur ESW 22 comprend un mécanisme 132 porté par un support 131 isolant, et destiné à actionner en translation trois broches 133 mobiles, coopérant en position de fermeture avec des contacts fixes 130 correspondants, solidarisés aux conducteurs 120. Le mécanisme 132 est équipé d'une manivelle 134 de commande, montée à rotation sur un axe 135, et articulée sur les extrémités isolées des broches 133. Des conducteurs 136 de connexion pour la mise à la terre du tronçon de jeu de barre BUS 22 relient le sectionneur ESW 22 à trois plots 151 de mise à la terre, chaque plot 151 étant associé à un isolateur de traversée 150. Les trois isolateurs de traversée 150 sont alignés et positionnés transversalement à intervalles réguliers sur le flasque 112, en dessous de l'embout 101 b excentré de raccordement (voir figure 3). Les trois plots 151 sont branchés extérieurement à la terre pour assurer la mise à la terre du jeu de barres BUS 22, lorsque le sectionneur FSW 22 est commuté en position de fermeture.

Le sous-ensemble 1 a de logement du transformateur de potentiel TP 21 et du sectionneur de mise à la terre ESW 21 est raccordé d'une manière identique par l'embout 101 a excentré au sousensemble 2 a renfermant le tronçon de jeu de barres BUS 21. Les éléments identiques des sousensembles 1 a, 2 a porteront les mêmes numéros de référence que ceux des sous-ensembles 1 b, 2 b, mais affectés de l'indice « a ». Les sousensembles 1 a, 2 a supérieurs sont superposés aux sous-ensembles 1 b, 2 b inférieurs avec interposition des moyens de supports 6, 8.

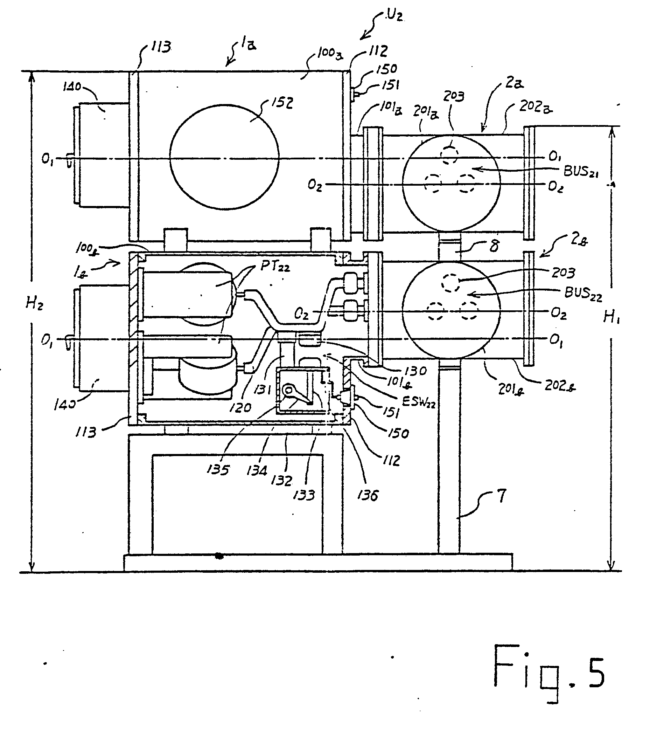

L'unité principale U1 de la figure 4 comporte une enveloppe 10 centrale pour le logement du disjoncteur CB, des sectionneurs de terre ESW 11, ESW 12 et des transformateurs de courant CT 11, CT 12. La bride 16 de l'enveloppe 10 est raccordée par un isolateur support 17 à une autre enveloppe 18 juxtaposée, renfermant le sectionneur de ligne DS 13, le sectionneur de terre ESW 13, le parafoudre LA et le départ CHd. L'enveloppe 18 repose sur un carter 19, dans lequel s'étendent les conducteurs C de départ ou d'arrivée.

A l'opposé de la bride 16, l'enveloppe 10 est pourvue de deux autres brides 12 a, 12 b superposées, raccordées par des isolateurs supports 13 a, 13 b à des carters 14 a, 14 b cylindriques renfermant les tronçons correspondants BUS 11, BUS 12 du double jeu de barres. Chaque carter 14 a, 14 b est obturé par une plaque 15 a, 15 b de fermeture, et sert également de logement au sectionneur d'aiguillage DS 11, DS 12 correspondant. L'enveloppe 10 centrale prend appui sur un socle 11 dans lequel se trouve le mécanisme de commande du disjoncteur CB.

Lors de la juxtaposition des deux unités U1 et U2 des figures 4 et 2 s'effectue le raccordement latéral des tronçons du double jeu de barres, c'est-à-dire le BUS 21 avec le BUS 11, et le BUS 22 avec le BUS 12. Les barres 203 du double jeu de barres triphasé s'étendent orthogonalement par rapport à la disposition longitudinale des deux unités U1 et U2 parallèles.

Selon la variante de l'unité auxiliaire U2 de la figure 5, les mêmes repères sont utilisés pour désigner des éléments identiques à ceux de la figure 2. L'architecture de l'unité U2 a été retournée par rapport au plan de la figure 2 , et les sousensembles 1 a, 2 a, ont de plus subi une rotation de 180 degrés. Il en résulte que la hauteur totale H1 du double jeu de barres est inférieure à la hauteur H2 du sous-ensemble 1 a, alors qu'elle était sensiblement identique dans la réalisation de la figure 2.

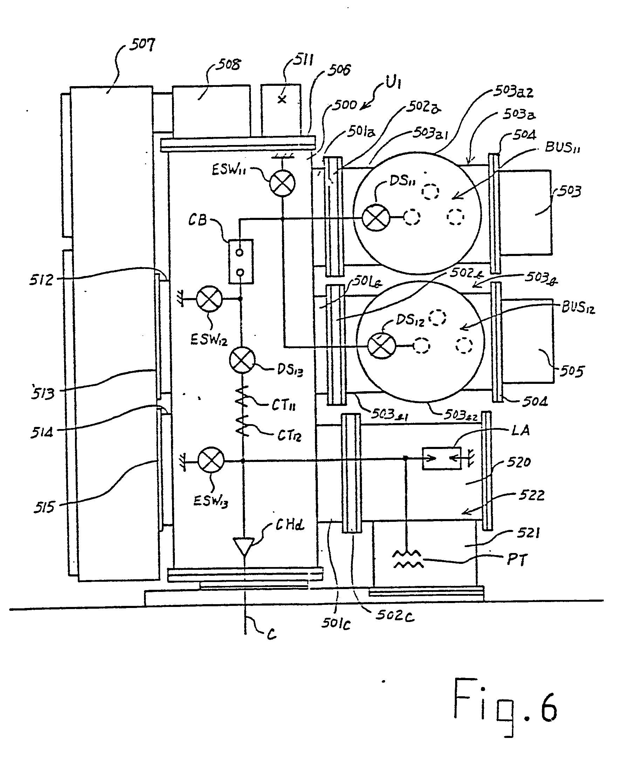

La figure 6 représente l'unité principale U1 destinée à être associée à l'unité auxiliaire U2 de la figure 5. La cuve 500 centrale renferme le disjoncteur CB, les trois sectionneurs de terre ESW 11, ESW 12, ESW 13, le sectionneur de ligne DS 13, les transformateurs de courant CT 11, CT 12 et le départ CHd. Chaque tronçon BUS 11, BUS 12 du jeu de barres triphasé est logé avec le sectionneur d'aiguillage DS 11, DS 12 correspondant dans un compartiment 503 a, 503 b raccordé à une bride 501 a, 501 b de la cuve 500 par un isolateur support 502 a, 502 b. Un troisième isolateur support 502 C est utilisé pour la connexion d'un carter 522 auxiliaire comprenant une chambre 520 de logement du parafoudre LA et une autre chambre 521 pour un transformateur de potentiel PT. La partie antérieure 512, 514 de la cuve 500 à l'opposé du jeu de barres, et la face supérieure 506 sont équipées de moyens 507, 508, 511 de commande et de surveillance de l'appareillage contenu à l'intérieur de la cuve 500.

## Revendications

1. Poste blindé (GIS) triphasé à enveloppe métallique, remplie de gaz isolant à rigidité diélectrique élevée, notamment de l'hexafluorure de soufre, ladite enveloppe étant commune aux trois phases et subdivisée en une pluralité de tronçons élémentaires raccordés entre eux, pour former des compartiments individuels étanches (100 a, 100 b), renfermant de l'appareillage électrique de coupure de connexion et de mesure, connecté électriquement entre un système de jeu de barres (BUS 21, BUS 22) triphasé et un départ (CHd) ou arrivée, l'un des compartiments servant de logement à un transformateur de potentiel triphasé, (PT 21, PT 22) connecté par des conducteurs de liaison (120) audit jeu de barres (BUS 21, BUS 22), qui s'étend dans un compartiment juxtaposé (200 a, 200 b) avec interposition d'un isolateur support (4 a, 4 b) entre les brides de raccordement (115, 101 a, 101 b) des compartiments accolés (100 a, 200 a ; 100 b, 200 b), caractérisé en ce que la bride de raccordement (115, 101 a, 101 b) du compartiment (100 a, 100 b) cylindrique, renfermant le transformateur de potentiel (PT 21, PT 22) se trouve excentrée par rapport à l'axe longitudinal (0101) dudit compartiment, et qu'un sectionneur de terre (ESW 21, ESW 22) est agencé à l'intérieur du compartiment (100 a, 100 b) du transformateur de potentiel (PT 21, PT 22) dans un espace libre ménagé radialement entre les conducteurs de liaison (120) et une paroi latérale interne dudit compartiment, la fermeture du sectionneur (ESW 21, ESW 22) provoquant la mise à la terre du jeu de barres triphasé (BUS 21, BUS 22).

2. Poste blindé triphasé selon la revendication 1, caractérisé en ce que le sectionneur de terre (ESW 21, ESW 22) du jeu de barres (BUS 21, BUS 22) est relié par des conducteurs internes de connexion (136) à trois plots (151) de mise à la terre, situés sur un flasque (112) équipé de ladite bride excentrée de raccordement à l'isolateur support (4 a, 4 b).

3. Poste blindé triphasé selon la revendication 2, caractérisé en ce que le flasque (112) est métallique, et que les trois plots (151) de mise à la terre sont associés à trois isolateurs de traversée (150), montés en alignement transversal sur ledit flasque (112) avec un décalage radial prédéterminé par rapport à l'axe (0202) de la bride (115, 101 a, 101 b) excentrée.

4. Poste blindé triphasé selon l'une des revendications 1 à 3, caractérisé en ce que le sectionneur de terre (ESW 21, ESW 22) triphasé comporte trois broches (133) mobiles en translation, coopérant avec des contacts fixes (130) alignés, portés par des branches rectilignes des conducteurs de liaison (120) correspondants, à l'intérieur dudit compartiment (100 a, 100 b).

5. Poste blindé triphasé selon l'une des revendications 1 à 4, caractérisé en ce que le diamètre de ladite bride (115, 101 a, 101 b) excentrée, est inférieur à celui du compartiment (100 a, 100 b) cylindrique, renfermant le transformateur de potentiel (PT 21, PT 22) et le sectionneur de terre (ESW 21, ESW 22) associé.

## Claims

1. A three-phase metalclad substation (GIS) having a metallic enclosure, filled with high dielectric strength insulating gas, notably sulphur hexafluoride, said enclosure being common to the three phases and subdivided into a plurality of interconnected elementary sections, to form sealed individual compartments (100 a, 100 b), housing electrical breaking connection and measurement equipment, electrically connected between a three-phase busbar system (BUS 21, BUS 22) and a feeder (CHd) or incomer, one of the compartments acting as a housing for a three-phase voltage transformer (PT 21, PT 22) connected by connecting conductors (120) to said busbar (BUS 21, BUS 22), which extends in a juxtaposed compartment (200 a, 200 b) with a support insulator (4 a, 4 b) interposed between the connecting clamps (115, 101 a, 101 b) of the adjoined compartments (100 a, 200 a ; 100 b, 200 b), characterized by the fact that the connecting clamp (115, 101 a, 101 b) of the cylindrical compartment (100 a, 100 b), housing the voltage transformer (PT 21, PT 22) is off-centre with respect to the longitudinal axis (0101) of said compartment, and that an earthing switch (ESW 21, ESW 22) is located inside the compartment (100 a, 100 b) housing the voltage transformer (PT 21, PT 22) in a free space arranged radially between the connecting conductors (120) and an internal side wall of said compartment, closing of the earthing switch (ESW 21, ESW 22) causing earthing of the three-phase busbar (BUS 21, BUS 22).

2. The three-phase metalclad substation according to claim 1, characterized by the fact that the earthing switch (ESW 21, ESW 22) of the busbar (BUS 21, BUS 22) is connected by internal connecting conductors (136) to three earthing studs (151), located on a flange (112), equipped with said off-centre connecting clamp with the support insulator (4 a, 4 b).

3. The three-phase metalclad substation according to claim 2, characterized by the fact that the flange (112) is metallic, and that the three earthing studs (151) are associated with three bushing insulators (150), fitted in transverse alignment on said flange (112) with a predetermined radial offset with respect to the axis (0202) of the off-centre clamp (115, 101 a, 101 b).

4. The three-phase metalclad substation according to one of the claims 1 to 3, characterized by the fact that the three-phase earthing switch (ESW 21, ESW 22) comprises three pins (133) movable in translation, operating in conjunction with aligned stationary contacts (130), supported by straight branches of the corresponding connecting conductors (120), inside said compartment (100 a, 100 b).

5. The three-phase metalclad substation according to one of the claims 1 to 4, characterized by the fact that the diameter of said off-centre clamp (115, 101 a, 101 b) is smaller than that of the cylindrical compartment (100 a, 100 b) housing the voltage transformer (PT 21, PT 22) and the associated earthing switch (ESW 21, ESW 22).


**Patentansprüche**

1. Dreiphasige, verkapselte Schaltanlage (GIS) mit einem metallischen Gehaeuse, das mit Isoliergas von hoher dielektrischer Festigkeit, insbesondere Schwefelhexafluorid, gefuellt ist, wobei das genannte Gehaeuse allen drei Phasen gemein ist und in eine Mehrzahl von miteinander verbundenen Grundabschnitten unterteilt ist, um dichte Einzelabteile (100 a, 100 b) zu bilden, in denen die elektrischen Trenn-, Verbindungs- und Messgeraete untergebracht sind, die elektrisch zwischen einem dreiphasigen Sammelschienensystem (BUS 21, BUS 22) und einem Abgang (CHd) oder einer Zufuehrung geschaltet sind, wobei eins der Abteile zur Unterbringung eines dreiphasigen Potential-Transformators (PT 21, PT 22) dient, der durch Verbindungsleiter (120) mit dem genannten. Sammelschienensystem (BUS 21, BUS 22) verbunden ist, das sich in dem danebenliegenden Abteil (200 a, 200 b) erstreckt, mit Einfuegung eines Tragisolators (4 a, 4 b) zwischen die Anschlussflansche (115, 101 a, 101 b) der miteinander verbundenen Abteile (100 a, 200 a ; 100 b, 200 b), dadurch gekennzeichnet, dass der Anschlussflansch (115, 101 a, 101 b) des zylindrischen, den Potential-Transformateur (PT 21, PT 22) enthaltenden Abteils (100 a, 100 b) gegenueber der Laengsachse (0101) des genannten Abteils exzentriert ist, und dass ein Erd-Trennschalter (ESW 21, ESW 22) im Innern des Abteils (100 a, 100 b) des Potential-Transformators (PT 21, PT 22) angeordnet ist, in einem freien Raum, der radial zwischen den Verbindungsleitern (120 und einer inneren Seitenwand des genannten Abteils vorgesehen ist, wobei das Schliessen des Trennschalters (ESW 21, ESW 22) die Erdung des dreiphasigen Sammelschienensystems (BUS 21, BUS 22) bewirkt.

2. Dreiphasige, verkapselte Schaltanlage gemaess Anspruch 1, dadurch gekennzeichnet, dass der Erd-Trennschalter (ESW 21, ESW 22) des Sammelschienensystems (BUS 21, BUS 22) durch interne Verbindungsleiter (136) mit drei Erdungskontakten (151) verbunden ist, welche auf einem Boden (112) angeordnet sind, der mit dem genannten exzentrierten Flansch ausgeruestet ist zum Anschluss an den Tragisolator (4 a, 4 b).

3. Dreiphasige, verkapselte Schaltanlage gemaess Anspruch 2, dadurch gekennzeichnet, dass der Boden (112) metallisch ist, und dass die drei Erdkontakte (151) mit drei Durchfuehrungs-Isolatoren (150) verbunden sind, die transversal ausgerichtet auf dem genannten Boden (112) montiert sind mit einer seitlichen vorbestimmten Verschiebung gegenueber der Achse (0202) des exzentrierten Flansches (115, 101 a, 101 b).

4. Dreiphasige verkapselte Schaltanlage gemaess einem der Ansprueche 1 bis 3, dadurch gekennzeichnet, dass der dreiphasige Erd-Trennschalter (ESW 21, ESW 22) drei geradlinig bewegliche Stifte (133) aufweist, die mit festen nebeneinander ausgerichteten Kontakten (130) zusammenarbeiten, die von geradlinigen Zweigen der entsprechenden Verbindungsleiter (120) getragen werden, im Innern des genannten Abteils (100 a, 100 b).

5. Dreiphasige, verkapselte Schaltanlage gemaess einem der Ansprueche 1 bis 4, dadurch gekennzeichnet, dass der Durchmesser des genannten exzentrierten Flansches (115, 101 a, 101 b) kleiner ist als der des zylindrischen Abteils (100 a, 100 b), der den Potential-Transformator (PT 21, PT 22) und den damit verbundenen Erd-Trennschalter (ESW 21, ESW 22) enthaelt.

Fig.1

Fig. 3

Fig.2

Fig.4

Fig.5

Fig.6